# EUROPEAN PATENT APPLICATION

(11) **EP 2 008 788 A2**
(43) Date of publication of application: **31.12.2008**
(21) Application number: 08158390.8
(22) Date of filing: 17.06.2008
(51) Int. Cl.: B29C 45/20, B29C 45/74

(54) **Nozzle device of injection molding machine**

(30) Priority: 25.06.2007 JP 2007166781
(71) Applicant: FANUC LTD, Minamitsuru-gun, Yamanashi 401-0597 (JP)
(72) Inventor: Asaoka, Hiroyasu, Oshino-mura, Minamitsuru-gun Yamanashi 401-0597 (JP); Shiraishi, Wataru, Oshino-mura, Minamitsuru-gun Yamanashi 401-0597 (JP); Takatsugi, Satoshi, Oshino-mura, Minamitsuru-gun Yamanashi 401-0597 (JP)
(74) Representative: Ward, James Norman

(57) **Abstract**

An injection molding machine nozzle (1) capable of letting heat escape from a nozzle end portion and preventing the occurrence of cobwebbing with a simple structure. A heat conducting member (2) is mounted on the nozzle end portion (1a). When the end of the nozzle is contacted against a mold (4) the heat conducting member also contacts the mold. The heat conducting member is composed of the material having heat conductivity equal to or greater than that of the nozzle. The heat of the nozzle end portion is conducted to the heat conducting member and released at the mold, thus preferentially cooling only melted resin of the nozzle end portion. Cobwebbing does not occur even when the mold is opened and the molded article is removed because the melted resin of the muzzle end portion has been cooled.

## Description

### BACKGROUND OF THE INVENTION

### 1. Field of the Invention

The present invention relates to a nozzle of an injection molding machine, and more particularly to a nozzle device of an injection molding machine that prevents occurrence of cobwebbing at an opening of a sprue of a mold in removing a molded article from the mold.

### 2. Description of Related Art

In an injection molding machine, melted resin is injected into and fills a cavity of a mold from a nozzle mounted at an distal end of a heating cylinder and thereafter cooled, the mold opened, and the molded article removed. At this time, melted resin inside an end portion of the nozzle sometimes attaches to the molded article and appears as a fine line at a sprue part of a molded article. This condition is commonly called cobwebbing. The threadlike portion sticking to the molded article leads to molding defects, and the sandwiching of the thread-like portion in the mold during subsequent molding can cause molding defects as well as damage to the mold.

Usually, by adjusting the molding conditions, a temperature of the melted resin is maintained so that cobwebbing does not occur. However, as molded articles continue to get thinner, the temperature of the melted resin needs to be increased in order to provide better moldability. Increasing the temperature of the melted resin requires more cooling until the resin hardens, and insufficient cooling increases the chances of cobwebbing occurring. Consequently, adjustment of the molding conditions alone is not enough to suppress cobwebbing.

As one means of preventing cobwebbing, a method has been proposed in which the nozzle end portion is made of a member having high heat conductivity, and the nozzle end portion resin is cooled by allowing the heat of the nozzle end portion to escape to the mold side so that cobwebbing does not occur (see, for example, JP2004-9462A and JP61-132318A).

In addition, a method is also known in which a cap made of a material having high heat conductivity is inserted into the end of the nozzle and the heat of the resin is conducted from this cap to a sprue bushing to cool the nozzle end portion resin and prevent the occurrence of cobwebbing (see JP2002-347075A).

Further, a method has also been proposed in which a heat-radiating fin is mounted on the nozzle and air from an air blow nozzle in this heat-radiating fin strikes and cools the nozzle end, cooling the nozzle end portion resin to prevent cobwebbing (see JP04-275119A).

Besides the aforementioned, approaches such as inserting between the nozzle and the mold sprue a thin planar member in which a slit or a star-shaped hole or the like is opened to prevent cobwebbing, and providing a slit inside the mold sprue to prevent cobwebbing, are also well known.

In the methods described in JP2004-9462A and JP61-132318A of forming the nozzle end portion with a member having high heat conductivity to prevent cobwebbing, because it is necessary to make the entire nozzle end portion out of a separate member, restrictions on the shape of the nozzle to the portion arise in order not to compromise its strength. The nozzle end portion is subjected to high injection pressure, and therefore shapes and materials must be selected that ensure the strength to withstand that injection pressure. Since materials must be used that have good heat conductivity and that moreover can withstand the injection pressure, the materials which can be used as members for the end portion are limited. Furthermore, since the nozzle is composed of two members, a joint surface is created in the resin flow portion of the nozzle, which can cause carbide formation.

Moreover, although it might be thought possible to form the nozzle end as a flat surface and increase the surface area of contact between the nozzle and the mold in order to increase the amount of heat released, since the contact surface area increases, the contact pressure of the nozzle in the vicinity of the sprue decreases, which can cause resin leakage.

In the case of a nozzle in which the nozzle end is spherical, typically, in order to increase the contact pressure in the vicinity of the sprue, where for example the end of the nozzle is a sphere with a radius of 10 mm the mold side is a spherical concave surface with a radius of 10.5 mm or 11 mm, such that the radius of the spherical concave surface of the mold side is slightly larger than the radius of the end of the nozzle. In a case such as this, since the portion of contact between the nozzle and the mold is very small and consequently heat conductivity efficiency is poor. When the amount of heat one wishes to release to the mold side is large, there is a limit to the heat release which can be achieved simply by increasing the heat conductivity of the end member.

On the other hand, with the method of inserting a cap in the resin flow passage portion of the nozzle as described in JP2002-347075A, a joint surface is created between the nozzle body and the melted resin flow surfaces inside the nozzle. It is difficult to make this joint surface smoothly flush, and so a step appears at this joint surface. When there is a step at this joint surface, melted resin stagnates at that portion, forming carbide. If the carbide peels off and flows into the product, it can cause molding defects. This is particularly the case with small-scale optical parts, in which even trace amounts of carbide can cause molding defects, thus limiting the types of molding to which this approach is applicable.

In the method of cooling the nozzle end by directing air onto it using a heat-radiating fin mounted on the nozzle end as described in JP04-275119A, a device that blows air against the heat-radiating fin is required. In addition, depending on the mold the sprue portion may be inwardly concave, such that, in a case in which the nozzle is inserted into this concave portion up to the portion where the heat-radiating fin is mounted so that the nozzle is contacted against the mold, it is difficult to selectively blow air against only the heat-radiating fin, with the result that the air blown against the heat radiating and cools of the nozzle portions and the heater as well. As a result, this approach leads to temperature decreases in unneeded portions and heat loss for the heater.

Methods involving inserting between the nozzle and the mold sprue a thin planar member in which a slit or a star-shaped hole or the like is opened or providing a slit inside the mold sprue, because they interpose a member that interferes with the flow in the melted resin flow part, can cause the resin to stagnate, leading to carbide formation.

### SUMMARY OF THE INVENTION

The present invention provides a nozzle device of an injection molding machine capable of letting the heat escape from a nozzle end portion to a mold and preventing an occurrence of cobwebbing with a simple structure.

A nozzle device of an injection molding machine according to the present invention comprises: a nozzle having an end portion to be brought into contact with a mold for injecting resin into the mold; and a heat conducting member fitted on a circumference of the end portion of said nozzle and arranged to be in contact with the mold when the end portion of said nozzle is brought into contact with the mold, so that heat is conducted from the end portion of said nozzle to the mold. With the above configuration, the heat of the end portion of the nozzle is released to the mold through the heat conducting member to preferentially cool the end portion of the nozzle, thus cooling the resin in end portion of the nozzle and preventing the occurrence of cobwebbing.

The heat conducting member may be made of material having heat conductivity equal to or greater than that of the nozzle.

The heat conducting member may be detachably fitted to the nozzle. The heat conducting member may be arranged movable with respect to the nozzle, and the nozzle device may further comprises a first elastic member arranged between the nozzle and the heat conducting member, so that the heat conducting member is pressed against the mold by an elastic force of the first elastic member when the end portion of the nozzle is brought into contact with the mold.

The mold may have a sliding member arranged slidably in the mold and a second elastic member to urge the sliding member toward the nozzle. In this case, the heat conducting member is in contact with the sliding member and presses the sliding member against a elastic force of the second elastic member when the end portion of the nozzle is brought into contact with the mold.

The heat conducting member may be arranged movable with respect to the nozzle, and the nozzle device may further comprise a pair of magnets arranged to confront and mutually repel each other on the nozzle and the heat conducting member, so that the heat conducting member is pressed against the mold by repelling forces of the magnets when the end portion of the nozzle is brought into contact with the mold.

The heat conducting member may be arranged movable with respect to the nozzle, and a magnet may be provided on at least one of contact faces of the heat conducting member and the mold, so that the heat conducting member is attracted to the mold by an attractive force of the magnet when the end portion of the nozzle is brought into contact with the mold.

The mold may have a sliding member arranged slidably in the mold and a pair of magnets arranged to confront and mutually repel each other for urging the sliding member toward the nozzle. In this case, the heat conducting member is in contact with the sliding member and presses the sliding member against repelling forces of the magnets when the end portion of the nozzle is brought into contact with the mold.

Dimensions of the heat conducting member may be adjusted or the heat conducting member may elastically deform such that a contact pressure of the heat conducting member and the mold is smaller than a contact pressure of the end portion of the nozzle and the mold.

The temperature of the melted resin inside the nozzle is maintained and melted resin in the nozzle end portion is preferentially cooled, thereby enabling occurrence of cobwebbing of the molded article to be suppressed. In addition, a simple structure of the heat conducting member fitted on the circumference of the end portion of the nozzle is free from restrictions on shape and enabling its applicability to a wide variety of nozzle shapes. Furthermore, the heat conducting member is provided on the circumference of the nozzle end portion and therefore does not affect the structure of a flow path of melted resin of the nozzle, and thus there is no risk of carbide formation.

### BRIEF DESCRIPTION OF THE DRAWINGS

FIG. 1 is a diagram illustrating a first embodiment of the present invention;
FIG. 2 is a sectional view of a state in which the nozzle contacts the mold during molding in the first embodiment;
FIG. 3 is a sectional view of a state during molding in which the nozzle contacts the mold in a second embodiment of the present invention;
FIG. 4 is a sectional view of a state during molding in which the nozzle contacts the mold in a third embodiment of the present invention;
FIG. 5 is a diagram illustrating means for preventing a heat conducting member from falling off the nozzle in the embodiments; and
FIGS. 6a to 6c are diagrams illustrating examples of other means for preventing the heat conducting member from falling off the nozzle.

### DETAILED DESCRIPTION

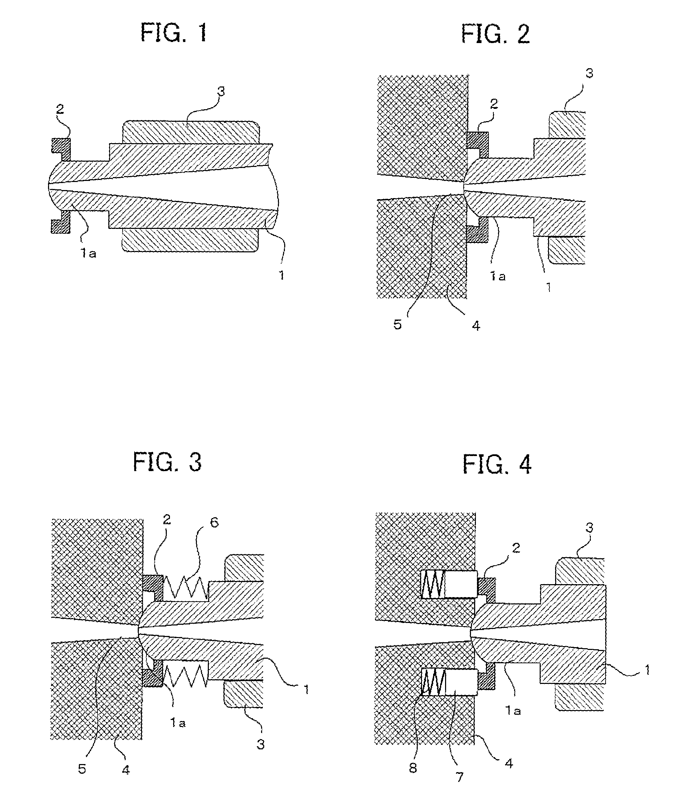

FIG. 1 and FIG. 2 are diagrams illustrating a first embodiment of the present invention.

A heater 3 is mounted on a circumference of a body of a nozzle 1. A heat conducting member 2 that conducts heat to that circumference and releases heat to a mold is mounted on a nozzle end portion 1a. The heat conducting member 2 is fitted on the circumference of the end portion 1a of the nozzle 1 mounted in a state of mutual contact with the body of the nozzle 1 by screws or the like, such that the outer peripheral part of the heat conducting member 2 projects toward the end of the nozzle.

As shown in FIG. 2, during molding and the like, when the end of the nozzle 1 contacts and is pressed against the mold 4, the mounting position of the heat conducting member 2 with respect to the nozzle 1 and the length of the outer peripheral part of the heat conducting member 2 extending toward the nozzle end are also adjusted so that the outer peripheral part of the heat conducting member 2 also contacts the mold 4.

Resin melted by a heating cylinder with the nozzle 1 is injected into a cavity of the mold 4 so as to fill the cavity of the mold 4. During this injection, an injection recoil force arises in a direction that separates the nozzle end from the mold 4, and therefore ordinarily a pressing force is applied so that the nozzle 1 does not separate from the mold 4, such that the nozzle 1 is pressed against and tightly contacts the mold 4. However, if the nozzle end and the heat conducting member 2 are contacted against the mold 4 with the same pressing force, at the moment of contact with the mold 4 the contact pressure of the nozzle end in the vicinity of the sprue decreases, and as a result, there is a risk of resin leakage during injection. Consequently, in this first embodiment, the dimensions of the heat conducting member 2 (that is, the length with which the outer peripheral part of the heat conducting member extends towards the nozzle end) is adjusted so that the contact pressure of the heat conducting member 2 against the mold 4 is smaller than the contact pressure of the nozzle end in the vicinity of the sprue. Moreover, by constituting the heat conducting member 2 as a member that elastically deforms, the contact pressure of the heat conducting member 2 against the mold 4 can be made smaller than the contact pressure of the nozzle end against the mold 4. Accordingly, separation of the nozzle end from the mold 4 by the recoil that arises during injection can be prevented even when the heat conducting member 2 is provided, so as to prevent leakage of melted resin.

In addition, since the purpose of the heat conducting member 2 is to conduct the heat of the nozzle end portion 1a to the mold 4 and release it to preferentially cool the nozzle end side, it is more effective to use a material for the heat conducting member 2 that has a heat conductivity equal to or greater than that of the nozzle body. Accordingly, the heat conducting member 2 is typically made of copper, copper alloy, aluminum, aluminum alloy, silver, gold, or the like, having good heat conduction. As for the shape of the heat conducting member 2, considering that the typical nozzle circumference is round, an annular shape would be appropriate. However, any shape is acceptable provided that it does not interfere when the nozzle 1 contacts the mold 4. The heat conducting member is not subjected to injection pressure, and therefore it is not necessary to take into consideration the strength required to withstand injection pressure when designing the heat conducting member 2. It is therefore sufficient only to determine the amount of heat to be released, the shape of the nozzle 1, and the shape of the mold face to be contacted.

As shown in FIG. 2, the nozzle end is brought into contact with the mold 4 and presses against the mold 4, and melted resin is injected into and fills the cavity of the mold 4 from the nozzle body. Subsequently, it is cooled, the mold is opened, and the molded article is removed. However, since the heat conducting member 2 is also in contact with the mold 4, the nozzle end portion is cooled quickly, and a temperature of the resin of the nozzle end portion decreases. In other words, although melted resin is present inside the nozzle 1, since the temperature of the nozzle 1 body is lower than the temperature of the mold 4 in ordinary molding, the heat of the nozzle end portion 1a escapes to the mold 4 through the nozzle end face contacting the mold 4, and at the same time is transmitted through the heat conducting member 2, escapes to the mold 4, and is released. As a result, since only the end portion of the nozzle 1 is preferentially cooled, the temperature of the resin inside the nozzle end decreases, such that when the molded article is removed, and further, when the nozzle 1 is separated from the mold 4, the occurrence of cobwebbing is prevented.

Thus, as described above, in the present embodiment, by attaching the heat conducting member 2 to the nozzle end portion 1a the heat of the nozzle end portion 1a is conducted to the mold 4 and released, thereby cooling the nozzle end portion 1a resin temperature and thus preventing cobweb. In particular, by making the heat conducting member 2 detachably attachable to the nozzle end portion 1a and changing the material or the shape of the heat conducting member depending on the type of molding or the molding conditions, an optimum heat conducting member is attached to the nozzle 1.

In addition, so that the contact pressure between the nozzle 1 and the mold 4 does not decline, in the first embodiment described above the dimensions and the materials of the heat conducting member 2 are adjusted so that the contact pressure between the heat conducting member 2 and the mold 4 become smaller than the contact pressure between the nozzle 1 and the mold 4. Alternatively, however, the contact pressure between the heat connecting member 2 and the mold 4 may be maintained by using a spring or the like, an example of which is shown as a second embodiment.

FIG. 3 is a sectional view of a state during molding in which the nozzle 1 contacts the mold 4 in a second embodiment of the present invention.

The second embodiment differs from the first embodiment in that the heat conducting member 2 is attached along a fitting part with the nozzle end portion 1a in such a way as to be slidable in a direction of the axis of the nozzle (sideways in FIG. 3), and a spring 6 is provided on a surface of the heat conducting member opposite to the surface which faces the mold; the rest is the same as the first embodiment. In this second embodiment, the heat conducting member 2 is pressed against the mold 4 with a necessary and sufficient force by the recoil force of the spring 6 when the nozzle contacts the mold 4.

Since the heat conducting member 2 is there to conduct heat from the nozzle end portion 1a to the mold through such heat conducting member 2 and to release the heat, the contact force between the heat conducting member 2 and the mold 4 does not need to be large and instead needs only be sufficient to conduct the heat. In this second embodiment, the contact force between the heat conducting member 2 and the mold 4 is adjusted with the spring 6, and this spring 6 tightly attaches the heat conducting member to the mold with a small contact force. As a result, a decrease of contact pressure of the nozzle end in the vicinity of the sprue caused by contact of the heat conducting member 2 against the mold 4 is prevented. Therefore, even when the contact surface area of the heat conducting member 2 is enlarged, the contact pressure of the nozzle end does not change the very much, and thus there is no resin leakage.

The spring 6 used in the second embodiment may be a coil spring, a belleville spring, or a leaf spring. Alternatively, an elastically deformable member may be used in place of these springs.

In addition, a magnet may be used in place of the spring 6. In that case, since as described above the heat conducting member 2 and the mold 4 need only tightly contact each other to such an extent as to enable heat to be conducted therebetween, a magnet or magnets may be partially embedded in one or both of contact surfaces at which the mold 4 and the heat conducting member 2 contact each other, such that an attractive force exerted by the magnet(s) causes the mold 4 and the heating member 2 to tightly contact each other. Alternatively, a magnet may be provided in the face of the heat conducting member 2 that faces away from the mold, and a magnet of opposite polarity to the magnet mounted on the heating conducting member 2 disposed on the nozzle 1 side opposite the magnet mounted on the heat conducting member 2, such that the heat conducting member 2 is pushed in the direction of the mold 4 by a magnetic repulsive force and tightly contacts the mold 4.

FIG. 4 is a sectional view of a state during molding in which the nozzle 1 contacts the mold 4 in a third embodiment of the present invention.

This third embodiment of the present invention differs from the second embodiment in the placement of the spring. The heat conducting member 2 is fitted to and fixedly mounted on the nozzle end portion 1a, and a sliding member 7 embedded so as to be slidable within a groove is provided in a portion of the mold 4 that contacts the heat conducting member 2. A spring 8 is disposed at the bottom of the groove, causing the sliding member 7 to project from the face of the mold 4.

When the nozzle 1 presses against the mold 4, the heat conducting member 2 presses the sliding member 7 against the repulsive force of the spring 8. The sliding member 7 slides within the groove provided in the mold 4 and is in contact with the mold 4, and therefore, the heat of the nozzle end portion 1a conducted from the heat conducting member 2 is conducted to this sliding member 7 and from there to the mold 4 and released.

The third embodiment also uses the repulsive force of the spring 8 to contact the heat conducting member 2 and the sliding member (mold 4) tightly against each other, thereby enabling their contact pressure to be adjusted by the spring 8 and enabling that contact pressure to be set small.

In addition, in the third embodiment as well, the spring 8 may be a coil spring, a belleville spring, or a leaf spring, and moreover, an elastically deformable member may be used in place of the spring 8. Moreover, one magnet may be disposed in the bottom of the groove in which the sliding member 7 is disposed and the other magnet disposed in that surface of the sliding member 7 which is disposed opposite (i.e., facing) the bottom of the groove, and further, these two magnets may be disposed in a state of repulsion, such that the repulsive force of these two magnets causes the heat conducting member 2 and the sliding member 7 (mold 4) to tightly contact each other.

Additionally, in these first and second embodiments, the heat conducting member 2 is detachably attachable to the nozzle 1, such that, by substituting heat conducting members of different shapes and materials depending on the molding conditions and the mold 4, the amount of heat released is adjusted. As a result, since the same nozzle 1 can be used, many different moldings can be accommodated by a relatively simple change.

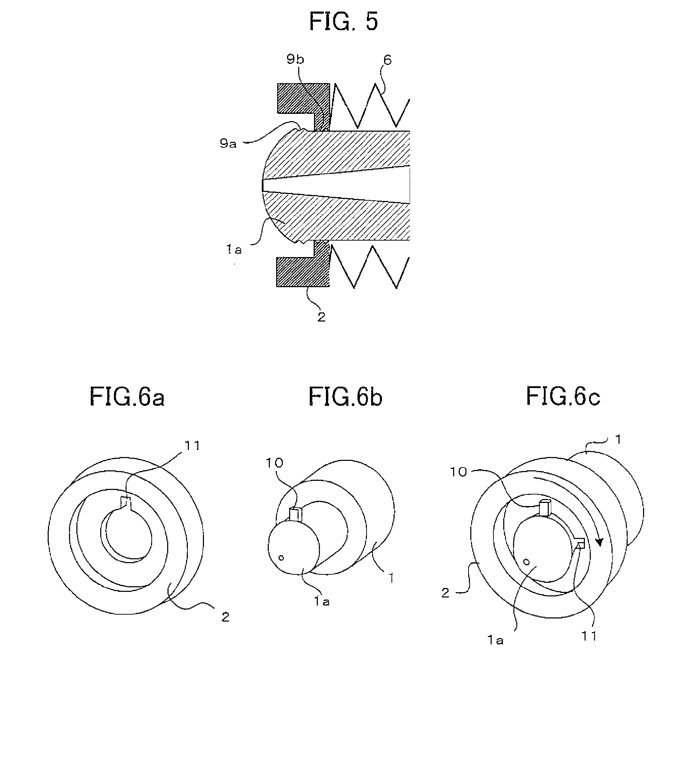

FIG. 5 is a diagram illustrating means for preventing the heat conducting member 2 from falling off the nozzle end portion 1a, in a case in which the heat conducting member 2 is detachably attachable to the nozzle end portion 1a.

In FIG. 5, a male screw 9a is provided in a portion of the end portion 1a of the nozzle 1 and a female screw 9b is provided in the heat conducting member 2. In the first and third embodiments, the heat conducting member 2 is fixedly mounted on the nozzle end portion 1a, and therefore the screw constituted as the male screw 9a and the female screw 9b acts as a tightening screw, fixing the heat conducting member 2 on the nozzle end portion 1a.

In the case of the second embodiment, the heat conducting member 2 is slidably mounted on the nozzle end portion 1a over the male screw 9a part of the nozzle end portion 1a. Thus, in a state of use the heat conducting member 2 is slidable about the nozzle end portion 1a, and the heat conducting member 2, although it is pressed against the mold 4, is retained by the male screw 9a of the screw body and thereby prevented from falling off the nozzle 1.

FIGS. 6a to 6c are diagrams illustrating other methods and means for preventing the heat conducting member 2 from falling off the nozzle 1.

In the example shown in FIGS. 6a-6c, a projection 10 is provided on the nozzle end portion 1a as shown in FIG. 6b and a corresponding notch 11 is provided in the heat conducting member 2 as shown in FIG. 6a. When the heat conducting member 2 is mounted on the nozzle 1, the projection 10 and the notch 11 are aligned and the projection 10 is inserted in the notch 11, after which the heat conducting member 2 is rotated a predetermined amount to reach the state shown in FIG. 6c, thus preventing the heat conducting member 2 from falling off the nozzle 1. In this case also, as shown in the second embodiment, the heat conducting member 2 is pressed against the mold 4 by a spring or the like, so that the heat conducting member 2 tightly contacts the mold 4.

## Claims

1. A nozzle device of an injection molding machine, comprising:
a nozzle having an end portion to be brought into contact with a mold for injecting resin into the mold; and
a heat conducting member fitted on a circumference of the end portion of said nozzle and arranged to be in contact with the mold when the end portion of said nozzle is brought into contact with the mold, so that heat is conducted from the end portion of said nozzle to the mold.

2. A nozzle device of an injection molding machine according to claim 1, wherein said heat conducting member is made of material having heat conductivity equal to or greater than that of said nozzle.

3. A nozzle device of an injection molding machine according to claim 1, wherein said heat conducting member is detachably fitted to said nozzle.

4. A nozzle device of an injection molding machine according to claim 1, wherein said heat conducting member is arranged movable with respect to said nozzle, and the nozzle device further comprises a first elastic member arranged between said nozzle and said heat conducting member, so that said heat conducting member is pressed against the mold by an elastic force of said first elastic member when the end portion of said nozzle is brought into contact with the mold.

5. A nozzle device of an injection molding machine according to claim 1, wherein the mold has a sliding member arranged slidably in the mold and a second elastic member to urge the sliding member toward said nozzle, and said heat conducting member is in contact with the sliding member and presses the sliding member against a elastic force of the second elastic member when the end portion of said nozzle is brought into contact with the mold.

6. A nozzle device of an injection molding machine according to claim 1, wherein said heat conducting member is arranged movable with respect to said nozzle, and the nozzle device further comprises a pair of magnets arranged to confront and mutually repel each other on said nozzle and said heat conducting member, so that said heat conducting member is pressed against the mold by repelling forces of said magnets when the end portion of said nozzle is brought into contact with the mold.

7. A nozzle device of an injection molding machine according to claim 1, wherein said heat conducting member is arranged movable with respect to said nozzle, and a magnet is provided on at least one of contact faces of said heat conducting member and the mold, so that said heat conducting member is attracted to the mold by an attractive force of the magnet when the end portion of said nozzle is brought into contact with the mold.

8. A nozzle device of an injection molding machine according to claim 1, wherein the mold has a sliding member arranged slidably in the mold and a pair of magnets arranged to confront and mutually repel each other for urging the sliding member toward said nozzle, and said heat conducting member is in contact with the sliding member and presses the sliding member against repelling forces of the magnets when the end portion of said nozzle is brought into contact with the mold.

9. A nozzle device of an injection molding machine according to claim 1, wherein dimensions of said heat conducting member are adjusted or said heat conducting member elastically deforms such that a contact pressure of said heat conducting member and the mold is smaller than a contact pressure of the end portion of said nozzle and the mold.
